Europäisches Patentamt

European Patent Office

Office européen des brevets

(19)

(11) EP 1 253 395 B1

(12) **EUROPEAN PATENT SPECIFICATION**

(45) Date of publication and mention
of the grant of the patent:
**05.10.2005 Bulletin 2005/40**

(51) Int Cl.[7]: **F28F 9/02**, B29C 65/08

(21) Application number: **02005579.4**

(22) Date of filing: **12.03.2002**

(54) **A plastic heat exchanger**

Ein Wärmetauscher aus Kunststoff

Echangeur de chaleur en plastique

(84) Designated Contracting States:
**AT BE CH CY DE DK ES FI FR GB GR IE IT LI LU MC NL PT SE TR**

(30) Priority: **27.04.2001 IT TO010401**

(43) Date of publication of application:
**30.10.2002 Bulletin 2002/44**

(73) Proprietor: **DENSO THERMAL SYSTEMS S.p.A.**
**10046 Poirino (Torino) (IT)**

(72) Inventors:
• **Mannoni, Alberto**
**10046 Poirino (Torino) (IT)**
• **Bella, Carlo**
**10046 Poirino (Torino) (IT)**

• **Bonaldo, Giuseppe**
**10046 Poirino (Torino) (IT)**
• **Colonna, Massimo**
**10046 Poirino (Torino) (IT)**

(74) Representative: **Marchitelli, Mauro**
**c/o Buzzi, Notaro & Antonielli d'Oulx Srl**
**Via Maria Vittoria 18**
**10123 Torino (IT)**

(56) References cited:
| | |
|---|---|
| DE-A- 3 712 275 | FR-A- 1 367 404 |
| FR-A- 2 337 867 | GB-A- 1 261 905 |
| GB-A- 2 085 572 | US-A- 3 561 524 |
| US-A- 4 618 516 | US-A- 4 919 987 |
| US-A- 5 125 431 | US-A- 5 288 350 |
| US-B1- 6 220 777 | |

## Description

The present invention relates to heat exchanger made of a plastic material according to the preamble of Claim 1. GB 1,261,905 shows such a heat exchanger.

Heat exchangers for vehicles comprising a plurality of plastic tubes arranged in a series of mutually parallel rows and a pair of plastic collector plates connected to the ends of the tubes have already been proposed. With regards to the collector plates, the solutions that contemplate manufacturing the plates in a single piece are affected by two orders of problems:

- stamping a high-precision plate with many holes (200-2000)of small diameter (hole diameters in the order of 1.5-5 mm), with consequent checks for shrinkage and deformation, whilst also avoiding the presence of moulding flash in the holes,
- automatically inserting the ends of the tubes in the holes of the collector plates.

Solutions whereby each collector plate is constructed from a number of plastic terminal elements that are overlapped and welded together have already been proposed to overcome these drawbacks. Each terminal element has a series of semicircular seats separated from each other by bonding portions suitable for being welded to corresponding bonding portions of a complementary terminal element. The assembly procedure for this type of heat exchanger starts from a first pair of terminal elements, engaging the ends of a first row of tubes in the semicircular seats of the terminal elements, positioning a second pair of terminal elements above the first row of tubes and welding the bonding portions of the terminal elements together. This operational sequence is repeated a number of times in correspondence to the number of rows of tubes that form the finished heat exchanger. Adjacent terminal elements are bonded together via welding, ultrasonic for example, causing the bonding portions in reciprocal contact to melt together. This welding operation is extremely delicate and requires especially accurate calibration of the welding parameters. In particular, if too much material is fused, flash formed by the plastic material can enter the ends of the tubes and cause a perforation, which will result in heat exchange fluid leakage in the finished heat exchanger. On the other hand, if the space between the butting surfaces of the bonding portions of the terminal elements is not completely closed during welding, a hermetic seal between the ends of the tubes and collector plate is not achieved and, in this case as well, the finished heat exchanger will have heat exchange fluid leaks.

The objective of the present invention is to provide improvements that allow the aforesaid drawbacks to be overcome.

According to the present invention, this object is attained by a heat exchanger having the characteristics forming the subject of the claim.

The characteristics and advantages of this invention will become evident from the detailed description that follows, supplied merely as a non limitative example, and with reference to the attached drawings, where:

- Figure 1 is a perspective view illustrating a plastic heat exchanger in accordance with the present invention,
- Figure 2 is a perspective view of the heat exchanger group indicated by arrow II in Figure 1,
- Figure 3 is a front view of a terminal element indicated by arrow III in Figure 2,
- Figure 4 is a schematic view illustrating the welding phase between two terminal elements,
- Figure 5 shows an enlarged detail of the part indicated by arrow V in Figure 4,
- Figure 6 is a schematic view illustrating the welding zone indicated by arrow VI in Figure 5, and
- Figures 7 and 8 are schematic views, respectively illustrating the welding zones in conditions where there is excessive or insufficient welding material between the bonding portions of the terminal elements.

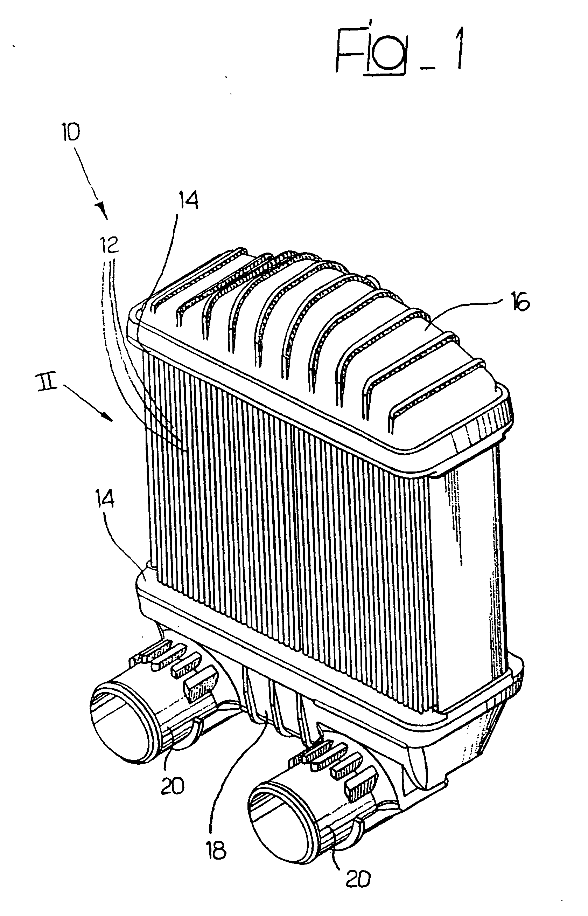

With reference to Figure 1, item 10 indicates a heat exchanger for vehicles made entirely of plastic. The heat exchanger 10 comprises a heat exchange core including a number of tubes 12 formed of thin plastic straws arranged in a number of mutually parallel rows. The ends of the tubes are bonded and sealed to a pair of collector plates 14, realized in the manner that will be described further on. Two tanks 16 and 18 are bonded to the respective collector plates 14. One of the tanks 18 is equipped with openings 20 for the inlet and outlet of the heat exchange fluid.

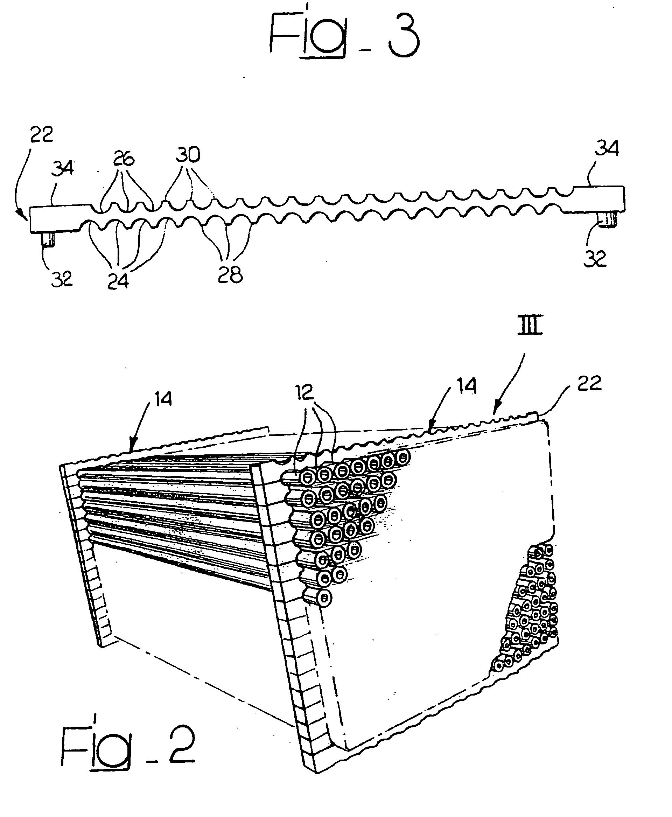

With reference to Figures 2 and 3, each collector plate 14 is formed by a number of plastic terminal elements 22. Each terminal element 22 includes a first and a second row of semicircular seats 24 and 26, separated from each other by bonding portions 28 and 30. Each terminal element 22 is equipped with a pair of spacer elements 32 destined to rest against a surface 34 of an identical terminal element 22.

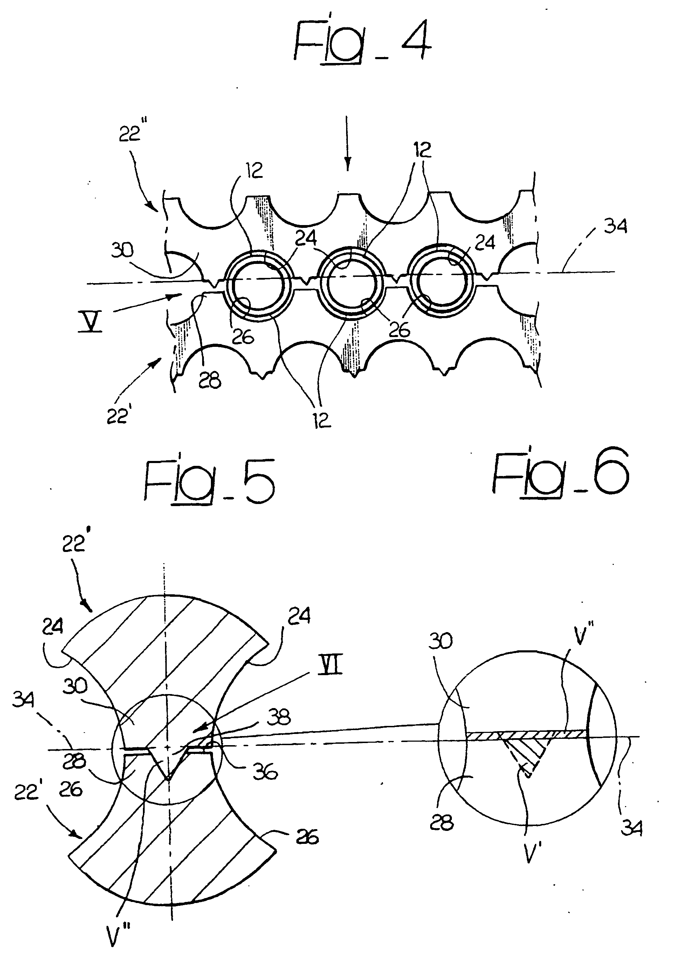

With reference to Figure 4, the assembly of the heat exchanger core illustrated in Figure 2 is carried out using single layers and each layer is realized via an operational sequence that contemplates:

- preparing a first terminal element 22',
- placing the ends of a row of tubes 12 in the seats 26 of the first terminal element 22',
- offering up a second terminal element 22" such that the ends of the tubes 12 engage with the seats 24 of the second terminal element 22",
- welding the bonding portions 28 and 30 of the bonding elements 22' and 22" together along the welding plane 34.

The welding is performed using a conventional ultrasonic welding device. The welding plane 34 represents an ideal joint plane that allows the semicircular seats 24 and 38 facing each other to be united together in order to form circular seats with a diameter equal to that of the external diameter of the ends of the tubes 12.

Figure 5 shows a magnified view of two complementary bonding portions 28 and 30 that are destined to be bonded together via welding. Figure 5 illustrates the position of the welding plane 34 with respect to the two terminal elements 22' and 22". Each bonding portion 28 of the terminal element 22' has a butt surface 36 that is set back with respect to the welding plane 34. The volume between the welding plane 34 and the butt surfaces 36 of the terminal element 22' is indicated by V'. Always with reference to Figure 5, each bonding portion 30 of the terminal element 22" has a welding portion 38 projecting beyond the welding plane 34. The volume of material of each bonding portion 30 projecting beyond the welding plane 34 is indicated by V".

The fill ratio R is defined as the ratio between the volumes V' and V". According to the present invention, the fill ratio R is in the range 0.8 to 1.3:

$$R = V' / V''$$

$$0.8 < R < 1.3$$

Figure 6 illustrates the bonding zone between the bonding portions 28 and 30 after welding is completed. The fact of having a fill ratio close to unity allows the volume V' to be filled with material originating from the melting of volume V". This permits an ideal bond between the terminal elements 22' and 22" to be achieved. In particular, the problems of excess molten material occluding the ends of the tubes or of zones that are not completely sealed due to an insufficient amount of molten material are avoided.

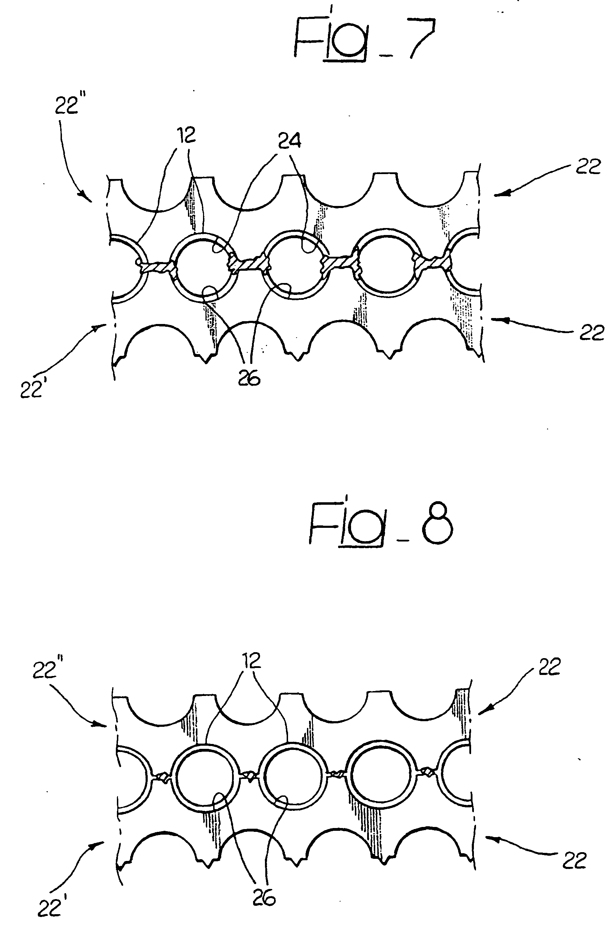

Figure 7 illustrates the situation following a welding operation with a fill ratio that is too high, in excess of 1.3. In this case, the excess molten material exudes laterally from the reciprocal mating surfaces of the bonding portions and invades the spaces of the tubes. As is schematically illustrated in Figure 7, the molten material may damage the walls of the tubes and cause heat exchange fluid leaks. Figure 8 illustrates the opposite situation, where welding is carried out with a fill ratio that is too low, less than 0.8. In this case, the material that is welded is insufficient to fill the empty space between the butt surfaces of the bonding portions, giving rise to openings that can cause heat exchange fluid leaks via the collector plate.

Optimal bonding conditions are achieved with an fill ratio R in the range from 0.8 to 1.3, permitting optimal bonding between the terminal elements to be achieved whilst avoiding both of the problems schematized in Figures 7 and 8.

## Claims

1. A heat exchanger (110), comprising a plurality of plastic tubes (12) arranged in a series of mutually parallel rows and a pair of plastic collector plates (14) bonded to the respective ends of the said tubes (12), each collector plate (14) being formed by a plurality of plastic terminal elements (22), each of which has at least one set of semicircular seats (24 and 26) suitable for receiving the ends of a row of tubes (12) and where the said semicircular seats (24 and 26) of each terminal element (22) are separated from each other by bonding portions (28 and 30) suitable for welding to the corresponding bonding portions of a complementary terminal element along a welding plane (34), **characterized in that** the said bonding portions (28) of a first terminal element (22') have butt surfaces (36) that are set back with respect to the said welding plane (34), **in that** the bonding portions (30) of a second terminal element (22") destined to be bonded to the first terminal element (22') have welding portions (38) projecting across the said welding plane (34) and **in that** the ratio (R) between the volume of the said welding portions (38) and the volume between the said butt portions (36) and the said welding plane (34) is in the range 0.8 to 1.3

## Patentansprüche

1. Wärmetauscher (110), der eine Vielzahl von Rohren (12) aus Kunststoff umfasst, die in einer Folge von zweiseitig parallelen Reihen angeordnet sind, und ein Paar Kollektorplatten (14) aus Kunststoff umfasst, die an den jeweiligen Enden der Rohre (12) befestigt sind, wobei jede Kollektorplatte (14) durch eine Vielzahl von Kunststoff-Anschlusselementen (22) gebildet ist, von denen jedes wenigstens eine Garnitur halbkreisförmige Sitze (24 und 26) aufweist, die zur Aufnahme der Enden einer Reihe von Rohren (12) geeignet sind, und die halbkreisförmigen Sitze (24 und 26) jedes Anschlusselementes (22) durch Verbindungsabschnitte (28 und 30) voneinander getrennt sind, die zum Anschweißen an die entsprechenden Verbindungsabschnitte eines komplementären Anschlusselementes entlang einer Schweißebene (34) geeignet sind, **dadurch gekennzeichnet, dass**

   - die Verbindungsabschnitte (28) eines ersten Anschlusselementes (22') Stoßflächen (36) aufweisen, die bezüglich der Schweißebene (34) zurückgesetzt sind,

- die zur Befestigung an dem ersten Anschlusselement (22') bestimmten Verbindungsabschnitte (30) eines zweiten Anschlusselementes (22") Schweißabschnitte (38) aufweisen, die über die Schweißebene (34) vorspringen, und

- das Verhältnis (R) zwischen dem Volumen der Schweißabschnitte (38) und dem Volumen zwischen den Stoßabschnitten (36) und der Schweißebene (34) im Bereich 0,8 bis 1,3 liegt.

**Revendications**

1. Echangeur de chaleur (110), comprenant une pluralité de tubes en plastique (12) agencés dans une série de rangées mutuellement parallèles et une paire de plaques de collecteur (14) en plastique liées sur les extrémités respectives desdits tubes (12), chaque plaque de collecteur (14) étant formée par une pluralité d'éléments terminaux en plastique (22), chacun d'entre eux ayant au moins une série de sièges demi-circulaires (24 et 26) convenant pour recevoir les extrémités d'une rangée de tubes (12) et où lesdits sièges demi-circulaires (24 et 26) de chaque élément terminal (22) sont séparés l'un de l'autre par des parties de liaison (28 et 30) convenant pour le soudage à des parties de liaisons correspondantes d'un élément terminal complémentaire le long d'un plan de soudage (34), **caractérisé en ce que** lesdites parties de liaison (28) d'un premier élément terminal (22') ont des surfaces de contact (36) qui sont en retrait par rapport au dit plan de soudage (34), **en ce que** les parties de liaison (30) d'un second élément terminal (22") destiné à être lié sur le premier élément terminal (22') ont des parties de liaison (38) faisant saillie au-delà dudit plan de soudage (34) et **en ce que** le rapport (R) entre le volume desdites parties de liaison (38) et le volume entre lesdites parties de contact (36) et ledit plan de soudage (34) est dans une plage de 0,8 à 1,3.

Fig _ 1

Fig - 3

Fig - 2

EP 1 253 395 B1

Fig_4

Fig_5    Fig_6

7

EP 1 253 395 B1

Fig_7

22"    12    24    22

22'    26    22

Fig_8

22"    12    22

22'    26    22

8